# EUROPÄISCHE PATENTANMELDUNG

(11) **EP 4 018 891 A1**
(43) Veröffentlichungstag der Anmeldung: **29.06.2022**
(21) Anmeldenummer: 21208437.0
(22) Anmeldetag: 16.11.2021
(51) Int. Cl.: A47J 36/32, A47J 39/02

(54) **TEMPERIERUNGSELEMENT FÜR EINEN SPEISENBEHÄLTER**

(30) Priorität: 04.12.2020 DE 102020215335
(71) Anmelder: BSH Hausgeräte GmbH, 81739 München (DE)
(72) Erfinder: Bauer, Maximilian, 81669 München (DE); Bosen, Peter, 85354 Freising (DE); Dudarenka, Alena, 80797 München (DE); Schmid, Paul, 80333 München (DE)

(57) **Zusammenfassung**

Ein Temperierungselement ist als Untersatz für einen Speisenbehälter ausgebildet. Dabei umfasst das Temperierungselement eine Anlagefläche für den Speisenbehälter; ein steuerbares Element zur Erwärmung oder Abkühlung der Anlagefläche; einen Sensor zur Abtastung eines an das Temperierungselement angrenzenden weiteren Temperierungselements; und eine Steuervorrichtung, die dazu eingerichtet ist, eine Temperatur der Anlagefläche in Abhängigkeit des weiteren Temperierungselements zu steuern.

## Beschreibung

Die vorliegende Erfindung betrifft ein Temperierungselement für einen Speisenbehälter. Insbesondere betrifft die Erfindung die Steuerung eines solchen Temperierungselements.

Ein Speisenbehälter an einem Esstisch kann warm gehalten werden, indem er auf eine entsprechende Heizung gestellt wird. So kann der Inhalt des Speisenbehälters auch nach längerer Zeit noch eine angenehme Temperatur für den Verzehr aufweisen. Heizungen, die Brennstoff verbrennen, sind oft kostengünstig und kompakt, können aber allgemein schlecht reguliert werden. Eine elektrische Heizung ist hingegen gut steuerbar und kann einfach kabelgebunden oder in Verbindung mit einem elektrischen Energiespeicher in einem kabellosen Gerät eingesetzt werden.

Speisenbehälter können unterschiedlich groß und unterschiedlich geformt sein. Ist die Heizung größer als der Speisenbehälter, so kann eine beträchtliche Heizleistung der Heizung ungenutzt in eine Umgebung entweichen. Ist der Speisenbehälter größer als die Heizung, so kann er nicht gleichmäßig oder nicht ausreichend erwärmt werden. Wird ein großer Speisenbehälter auf mehrere Heizungen gestellt, so können die einzelnen Heizungen schlecht zugänglich sein. Eine gleichmäßige Steuerung der Heizungen kann dadurch erschwert sein.

Eine der vorliegenden Erfindung zugrunde liegende Aufgabe besteht in der Angabe einer verbesserten Technik zur flexiblen Temperierung eines Speisenbehälters. Die Erfindung löst diese Aufgabe mittels der Gegenstände der unabhängigen Ansprüche. Unteransprüche geben bevorzugte Ausführungsformen wieder.

Ein Temperierungselement ist als Untersatz für einen Speisenbehälter ausgebildet. Nach einem ersten Aspekt der vorliegenden Erfindung umfasst das Temperierungselement eine Anlagefläche für den Speisenbehälter; ein steuerbares Element zur Erwärmung oder Abkühlung der Anlagefläche; einen Sensor zur Abtastung eines an das Temperierungselement angrenzenden weiteren Temperierungselements; und eine Steuervorrichtung, die dazu eingerichtet ist, eine Temperatur der Anlagefläche in Abhängigkeit des weiteren Temperierungselements zu steuern.

Erfindungsgemäß ist es möglich, mehrere Temperierungselemente zu einem System oder einer Anordnung zusammenzufügen, wobei eines der Elemente von einem anderen aus gesteuert werden kann. Das Temperierungselement kann einzeln oder mit weiteren Elementen flexibel zur Temperierung einer Speise eingesetzt werden. Insbesondere kann das Temperierungselement außerhalb einer Küche eingesetzt werden, beispielsweise auf einem Esstisch oder einem Büffet, innerhalb eines Hauses oder Draußen.

In einer Ausführungsform ist das Temperierungselement nur dazu eingerichtet, den Speisenbehälter zu erwärmen; in einer anderen kann der Speisenbehälter nur abgekühlt werden, während in einer dritten Ausführungsform alternativ eine Abkühlung oder Erwärmung gesteuert werden kann. Die jeweilige Ausführungsform kann in Abhängigkeit geltender Anforderungen und eines zu betreibenden Aufwandes gewählt werden.

In einer Variante ist die Steuervorrichtung dazu eingerichtet, die Temperatur der Anlagefläche auf eine vorbestimmte Zieltemperatur zu steuern, wobei ferner eine Kommunikationseinrichtung zur Kommunikation mit dem weiteren Temperierungselement vorgesehen ist. Dabei ist die Steuervorrichtung dazu eingerichtet, die Zieltemperatur an das weitere Temperierungselement bereitzustellen oder eine Zieltemperatur des weiteren Temperierungselements zu empfangen.

Eine Zieltemperatur, die an einem der Temperierungselemente vorgegeben ist, kann so auch für ein anderes Temperierungselement gelten. Dieses Prinzip kann auf mehr als zwei Temperierungselemente ausgedehnt werden, sodass Zieltemperaturen einer Vielzahl Temperierungselemente von nur einem der Temperierungselemente aus gesteuert werden kann. Durch die Übernahme der Zieltemperatur eines anderen Temperierungselements kann verhindert werden, dass nahe aneinander liegende Temperierungselemente stark unterschiedliche Zieltemperaturen aufweisen. So kann insbesondere verhindert werden, dass ein Temperierungselement seine Umgebung erwärmt, während ein nahegelegenes weiteres Temperierungselement seine Umgebung abkühlt. Ein Speisenbehälter, der mehrere Temperierungselemente abdeckt, kann verbessert temperiert werden.

In einer weiteren Variante ist ein Temperatursensor vorgesehen, der dazu eingerichtet ist, eine Temperatur der Anlagefläche des weiteren Temperierungselements zu bestimmen. Dabei ist die Steuervorrichtung bevorzugt dazu eingerichtet ist, die Temperatur der Anlagefläche in Abhängigkeit der Temperatur der Anlagefläche des weiteren Temperierungselements zu steuern. In dieser Variante kann eine Synchronisation der Zieltemperaturen erfolgen, ohne dass die beiden Temperierungselemente miteinander kommunizieren müssten. Entsprechende Kommunikationseinrichtungen können nicht erforderlich sein.

Optional ist ein Temperatursensor vorgesehen, um eine Temperatur des Speisenbehälters zu bestimmen. Die Temperatur kann insbesondere bestimmt werden, wenn der Speisenbehälters auf der Anlagefläche abgestellt wird. Die bestimmte Temperatur kann dann als Zieltemperatur übernommen werden. Wird der Speisenbehälter auf zwei oder mehr Temperierungselemente abgestellt, so kann eine Synchronisation der Zieltemperaturen der Temperierungselemente erfolgen.

Es ist weiter bevorzugt, dass das Temperierungselement einen Gewichtssensor umfasst, der bevorzugt dazu eingerichtet ist, ein Gewicht des Speisenbehälters zu bestimmen. Die Steuervorrichtung ist bevorzugt dazu eingerichtet, eine mangelnde Anlage des Speisenbehälters an der Anlagefläche zu bestimmen und das steuerbare Element zu deaktivieren. So kann verhindert werden, dass eine Temperierung eines nicht vorhandenen Speisenbehälters versucht wird. Eine übermäßige Erwärmung oder Abkühlung der leerstehenden Anlagefläche kann so verhindert werden. Ein Einsatz von Energie zum Temperieren des Speisenbehälters kann insgesamt verringert sein.

Ferner ist bevorzugt, dass das Temperierungselement derart geformt ist, dass es seitlich an einem weiteren, gleich geformten Temperierungselement anliegen kann. Insbesondere kann das Temperierungselement eine erste und eine zweite seitliche Oberfläche aufweisen, die auf unterschiedlichen Seiten des Elements liegen und zueinander korrespondierend geformt sind. Beispielsweise können beide seitlichen Oberflächen als Ebenen ausgeführt sein, die sich bevorzugt in vertikaler Richtung erstrecken können. In einer anderen Ausführungsform kann die eine Oberfläche ein- oder zweidimensional konkav und die andere entsprechend konvex gestaltet sein. Andere, komplexere Oberflächen sind ebenfalls möglich, beispielsweise in Polygon- oder Wellenform. In einer Weiterführung der Erfindung können die zueinander korrespondierenden Oberflächen derart ausgebildet sein, dass sie in gegenseitigen Formschluss gebracht werden können. Der Formschluss kann insbesondere in horizontaler Richtung wirken, sodass ein unbeabsichtigtes Verrutschen seitlich aneinander anliegender Temperierungselemente verhindert ist. Beispielsweise kann der Formschluss nach Art zweier ineinander eingreifender Puzzlestücke ausgeführt sein.

Nach einem weiteren Aspekt der vorliegenden Erfindung umfasst ein System wenigstens zwei hierin beschriebene Temperierungselemente. Das System kann um eine beliebige Anzahl weiterer Temperierungselemente erweitert werden. Bevorzugt sind die Temperierungselemente jeweils dazu eingerichtet, an einem hierin beschriebenen Verfahren teilzunehmen, welches bewirken kann, dass eine Anordnung seitlich aneinander liegender Temperierungselemente in der Erwärmung oder Abkühlung ihrer zur Ablage eines Speisenbehälters vorgesehenen Anlageflächen zentral von einem der Temperierungselemente aus gesteuert werden können. In einer Variante kann ein primäres Temperierungselement bestimmt werden, an dem eine Einstellung der Erwärmung oder Abkühlung vorgenommen werden kann, während die anderen Temperierungselemente als sekundär bestimmt und in Abhängigkeit des primären Temperierungselements gesteuert werden können. Zur Interaktion mit einem Benutzer kann ein Temperierungselement ein dediziertes Bedienelement umfassen. Zur Bereitstellung eines Hinweises auf einen Betriebszustand, beispielsweise auf eine Ziel- oder Ist-Temperatur, kann auch eine Ausgabevorrichtung vorgesehen sein. Ein Temperierungselement kann jedoch auch von einer entfernten Bedieneinrichtung aus gesteuert werden.

Nach einem weiteren Aspekt der vorliegenden Erfindung umfasst ein weiteres System ein hierin beschriebenes Temperierungselement und eine Bedieneinrichtung mit einer drahtlosen Kommunikationseinrichtung zur Steuerung des Temperierungselements. Mittels der Bedieneinrichtung kann insbesondere eine Zieltemperatur des Temperierungselements vorgegeben werden. Das System kann auch mehrere Temperierungselemente umfassen, die einzeln mittels der Bedieneinrichtung gesteuert werden können. In noch einer bevorzugten Ausführungsform kann mittels der Bedieneinrichtung eines von mehreren Temperierungselementen des Systems als primär bestimmt werden, wodurch alle anderen Temperierungselemente als sekundär bestimmt werden können. Die Definition eines der Temperierungselemente als primär kann auch mittels eines geräteeigenen Bedienelements durchgeführt werden. Die Steuerung des primären Temperierungselements kann lokal an diesem Element oder drahtlos mittels der Bedieneinrichtung erfolgen.

Nach noch einem weiteren Aspekt der vorliegenden Erfindung umfasst ein Verfahren zum Steuern einer zusammenhängenden Anordnung benachbarter Temperierungselemente, die jeweils zur Temperierung eines Speisenbehälters eingerichtet sind, Schritte des Bestimmens eines der Temperierungselemente als primäres Temperierungselement; des Bestimmens der restlichen Temperierungselemente als sekundäre Temperierungselemente; und des Steuerns der sekundären Temperierungselemente in Abhängigkeit des primären Temperierungselements.

Das Verfahren kann ein Hinzufügen oder Entfernen eines oder mehrerer Temperierungselemente zu einer bestehenden Anordnung unterstützen.

Beispielsweise kann bestimmt werden, dass zu einer Anordnung mit einem primären Temperierungselement ein weiteres Temperierungselement hinzugefügt wird. Dabei kann das hinzugefügte Temperierungselement als sekundär bestimmt werden. Diese Vorgehensweise kann insbesondere vorteilhaft sein, wenn das hinzugefügte Temperierungselement nicht selbst als primär bestimmt ist. Beispielsweise kann das hinzugefügte Temperierungselement erst später eingeschaltet werden. In einer Variante kann das Einschalten durch das Hinzufügen bzw. ein seitliches Anlegen des Temperierungselements an einem anderen Temperierungselement ausgelöst werden.

Eine Kommunikation zwischen einer Vielzahl Temperierungselemente kann auf beliebige Weise erfolgen. In einer Ausführungsform kann jedes sekundäre Temperierungselement eine Punkt-zu-Punkt-Verbindung zum primären Temperierungselement aufbauen. In einer anderen Ausführungsform können die Temperierungselemente nach Art eines Mesh-Netzwerks Nachrichten übermitteln. Sind die Temperierungselemente nach Art einer Kette organisiert, so kann eine Nachricht entlang der Kette weitergegeben werden. Ist eine bestimmte Reihenfolge der Nachrichtenübertragung vorgesehen, spricht man auch von einer Daisy Chain. Nachrichten zwischen den Temperierungselementen können auch beispielsweise nach dem Hot-Potato-Verfahren weitergegeben werden. Andere Verfahren, die insbesondere dem Routing flexibler Netzwerke entlehnt sein können, sind ebenfalls möglich.

Es kann bestimmt werden, dass zu einer ersten Anordnung mit einem primären Temperierungselement eine zweite Anordnung mit einem primären Temperierungselement hinzugefügt wird. Dabei können die Temperierungselemente der zahlenmäßig kleineren Anordnung als sekundär bestimmt werden. Das primäre Temperierungselement der zahlenmäßig größeren Anordnung kann als primär beibehalten werden. Für einen Benutzer kann diese Art des Zusammenschlusses mehrerer Anordnungen intuitiv leicht erfassbar sein. Alternativ kann nach dem Zusammenfügen auch ein neues primäres Temperierungselement bestimmt werden.

Besteht zahlenmäßige Gleichheit der Größen der Anordnungen, so kann eine Eingabe eines Benutzers zur Wahl eines primären Temperierungselements bestimmt werden. Alternativ kann eines der beiden primären Temperierungselemente im Losverfahren als primär bestimmt werden. In einer weiteren Ausführungsform kann auch eine Heuristik eingesetzt werden, um eines der Temperierungselemente der zusammengefügten Anordnung als primär zu bestimmen. Beispielsweise kann gefordert sein, dass das primäre Temperierungselement am Rand der Anordnung liegt.

In einer weiteren Ausführungsform wird ein Temperierungselement als primär bestimmt, an dem eine Einstellung vorgenommen wird. Die Einstellung kann an einem Bedienelement erfolgen, das dem Temperierungselement zugeordnet ist. Alternativ kann auch eine externe Bedieneinrichtung dazu verwendet werden. Üblicherweise wird die Einstellung durch einen Benutzer vorgenommen. Die Einstellung betrifft allgemein eine Temperierung, die mittels des Temperierungselements vorgenommen wird, also eine Erwärmung oder Abkühlung des Speisenbehälters beziehungsweise der Anlagefläche. Beispielsweise kann die Einstellung eine Zieltemperatur oder eine an der Anlagefläche umgesetzte oder vom steuerbaren Element aufgenommene Leistung betreffen. In einer Ausführungsform führen nicht alle Einstellungen zur Bestimmung als primäres Temperierungselement. Beispielsweise kann eine Auswahl, welches der Temperierungselemente einer Anordnung primär sein soll oder eine Abfrage eines Betriebszustands das als primär bestimmte Temperierungselement nicht verändern. Umgekehrt kann auch vorgesehen sein, ein Temperierungselement auf der Basis einer Eingabe als primär zu bestimmen, ohne dabei eine Einstellung zu verändern. Es ist zu beachten, dass in einer Anordnung bevorzugt immer nur ein Temperierungselement als primär und alle anderen als sekundär bestimmt sind. Durch die eingabegesteuerte Bestimmung des primären Temperierungselements kann die Anordnung leicht von jedem der Elemente aus gesteuert werden.

Wird erfasst, dass das primäre Temperierungselement aus der Anordnung entfernt wurde, so kann eines der verbleibenden Temperierungselemente der Anordnung als primär bestimmt werden. Eine entsprechende Vorgehensweise kann auch gewählt werden, wenn das primäre Temperierungselement zusammen mit einem oder mehreren sekundären Temperierungselementen aus der Anordnung entfernt wird. Dadurch können sich zwei Anordnungen bilden, von denen eine ein neues primäres Temperierungselement bestimmt, sodass beide Anordnungen separat betriebsfähig sind. Das neu bestimmte primäre Temperierungselement kann ein zuletzt geltendes Steuerungsziel, beispielsweise in Form einer Zieltemperatur, übernehmen. Alternativ kann ein Steuerungsziel aktiviert werden, das vor dem Hinzufügen des betreffenden Temperierungselements zu einer Anordnung galt.

Ein hierin beschriebenes Temperierungselement und insbesondere dessen Steuervorrichtung kann dazu eingerichtet sein, ein hierin beschriebenes Verfahren ganz oder teilweise auszuführen. Dazu kann die Steuervorrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Die Erfindung wird nun unter Bezug auf die beiliegenden Figuren genauer beschrieben, in denen:
- Figur 1: ein System mit einer Anordnung von Temperierungselementen;
- Figur 2: eine Explosionsdarstellung eines beispielhaften Temperierungselements;
- Figur 3: Ansichten weiterer Ausführungsformen eines Temperierungselements;
- Figur 4: beispielhafte Anordnungen von Temperierungselementen; und
- Figur 5: eine Illustration eines Verfahrens zum Steuern von Temperierungselementen darstellt.

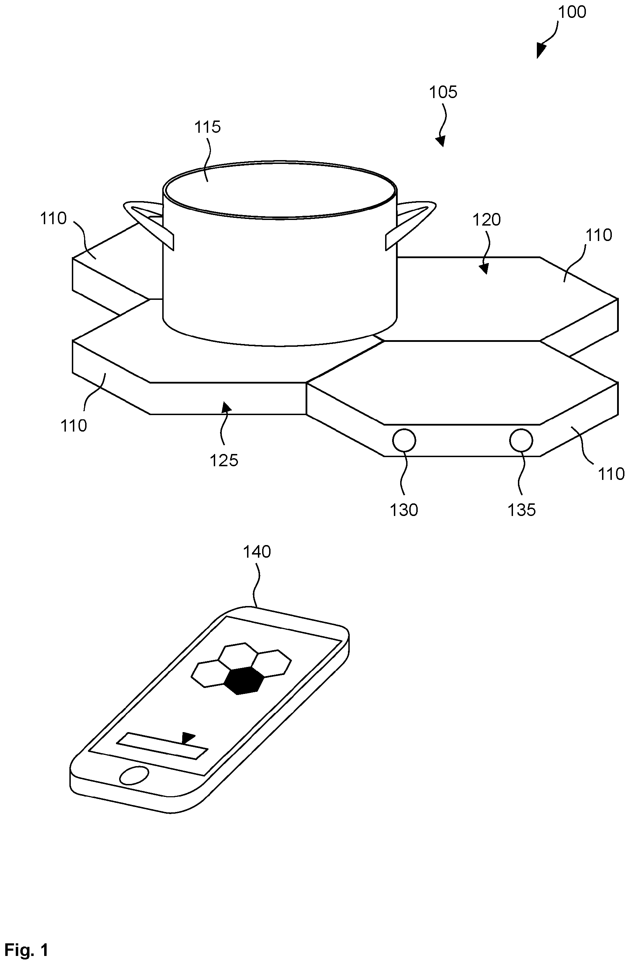

Figur 1 zeigt ein System 100 mit einer Anordnung 105 von Temperierungselementen 110. Ein Temperierungselement 100 ist dazu eingerichtet, einen Speisenbehälter 115 zu erwärmen oder abzukühlen. Dazu ist das Temperierungselement 110 bevorzugt als Untersetzer für den Speisenbehälter 115 ausgebildet, sodass dieser an einer dafür vorgesehenen oberen Anlagefläche 120 des Temperierungselements 110 anliegen kann. Das Temperierungselement 110 ist üblicherweise flach ausgebildet, wobei die Anlagefläche 120 bevorzugt eine ebene Oberfläche umfasst. Der Speisenbehälter 115 kann beispielsweise einen Topf, eine Pfanne, eine Schüssel, einen Teller, eine Schale, eine Platte, eine Karaffe, eine Flasche, eine Tasse oder ein Glas umfassen. Der Speisenbehälter 115 ist bevorzugt zur Aufnahme einer Speise oder eines Getränks eingerichtet, die für den menschlichen Verzehr bestimmt sind.

Bevorzugt sind die Temperierungselemente 110 dazu eingerichtet, seitlich aneinander anzuliegen. Dazu kann ein Temperierungselement 110 ein Seitenfläche 125 aufweisen, die dazu eingerichtet ist, an einer korrespondierenden Seitenfläche 125 eines benachbarten Temperierungselements 110 anzuliegen. In der dargestellten Ausführungsform sind die Temperierungselemente 110 beispielhaft sechseckig ausgestaltet, sodass sie jeweils sechs Seitenflächen 125 aufweisen, die gegenseitig aneinander anliegen können.

Ein Temperierungselement 110 kann ein Bedienelement 130 umfassen, um seinen Betrieb, insbesondere ein Erwärmen oder Abkühlen seiner Anlagefläche 120, zu steuern. Ein Anzeigeelement 135 kann zur Ausgabe eines Betriebszustands vorgesehen sein. Das Anzeigeelement 135 kann beispielsweise eine Kette von Leuchtelementen umfassen, die nach Art eines Thermometers eine Ziel- oder Ist-Temperatur der Anlagefläche 120 symbolisieren können.

Das System 100 umfasst optional eine Bedieneinrichtung 140, die separat von den Temperierungselementen 110 vorgesehen sein kann. Mittels der Bedieneinrichtung 140 können eines oder mehrere Temperierungselemente 110 gesteuert werden. In der dargestellten Ausführungsform umfasst die Bedieneinrichtung 140 beispielhaft ein drahtloses Gerät in Form eines Smartphones; eine andere und insbesondere dedizierte Bedieneinrichtung 140 ist ebenfalls möglich.

Es wird vorgeschlagen, dass die Temperierungselemente 110 der Anordnung 105 in gegenseitiger Abhängigkeit gesteuert werden. Insbesondere wird vorgeschlagen, ein Temperierungselement 110 entweder als primäres Temperierungselement 110.1 oder sekundäres Temperierungselement 110.2 zu konfigurieren. In einer Anordnung 105 befinden sich bevorzugt nur ein primäres Temperierungselement 110.1 sowie eines oder mehrere sekundäre Temperierungselemente 110.2. Ein primäres Temperierungselement 110.1 wird nach einer lokalen Vorgabe gesteuert, die beispielsweise durch einen Benutzer mittels des Bedienelements 130 oder der Bedieneinrichtung 140 bestimmt werden kann. Diese Vorgabe kann insbesondere aus einer Zieltemperatur der Anlagefläche 120 für den Speisenbehälter 115 bestehen.

Ein sekundäres Temperierungselement 110.2 folgt der Vorgabe eines primären Temperierungselements 110.1 einer gemeinsamen Anordnung 105. Dazu kann insbesondere eine Zieltemperatur des primären Temperierungselements 110.1 übernommen werden. In einer weiteren Ausführungsform kann ein sekundäres Temperierungselement 110.2 ein primäres 110.1 abtasten und seine eigene Funktion jener des primären Temperierungselements 110.1 möglichst angleichen. Es ist zu beachten, dass die Temperierungselemente 110 der Anordnung 105 benachbart sind, bevorzugt indem sie paarweise seitlich aneinander anliegen. Eine Nachbarschaftsbeziehung im Sinn dieser Anordnung soll jedoch auch transitiv gelten, sodass zwei Temperierungselemente 110 als benachbart gelten, die an dem gleichen weiteren Temperierungselement 110 anliegen. So gilt die Nachbarschaftsbeziehung für alle Temperierungselemente 110 einer Anordnung 105.

Welches Temperierungselement 110 einer Anordnung 105 primär und welches sekundär ist, kann automatisch oder durch einen Benutzer gesteuert werden. Ein Benutzer kann beispielsweise mittels des Bedienelements 130 oder der Bedieneinrichtung 140 eines der Temperierungselemente 110 als primär bestimmen. In der dargestellten Anordnung 105 ist rein beispielhaft das untere rechte als primär vorgesehen, wie auch symbolhaft auf einem Anzeigeelement der Bedieneinrichtung 140 durch die dunkle Fläche erkennbar ist.

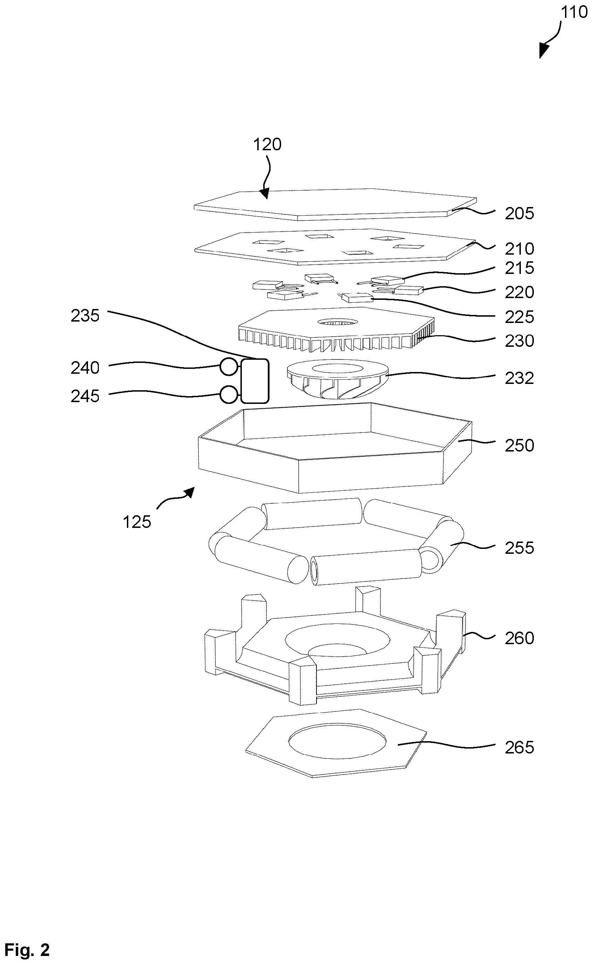

Figur 2 zeigt eine Explosionsdarstellung eines beispielhaften Temperierungselements 110. Dabei wird die in Figur 1 dargestellte sechseckige Form beispielhaft ebenfalls zu Grunde gelegt.

Eine Ablage 205 ist bevorzugt als oberer Abschluss des Temperierungselements 110 vorgesehen und trägt die Anlagefläche 120 für den Speisenbehälter 115. Unterhalb kann ein Träger 210 vorgesehen sein, der Aussparungen zur Aufnahme eines oder mehrerer steuerbarer Elemente 215 aufweist. Ein Element 215 kann zur Erwärmung oder Abkühlung der Ablage 205 eingerichtet sein. Zur Erwärmung kann das Element 215 beispielsweise eine Widerstandsheizung umfassen. Zur Kühlung kann ein thermoelektrisches Element, insbesondere ein Peltier-Element, vorgesehen sein. Außerdem kann ein Gewichtssensor 220 vorgesehen sein, um ein Gewicht bzw. das Vorhandensein des Speisenbehälters 115 auf der Ablage 205 zu bestimmen. Ein Temperatursensor 225 kann zur Bestimmung einer Temperatur des Speisenbehälters 115 bzw. der Ablage 205 vorgesehen sein.

Ein optionaler Kühlkörper 230 kann zur Ableitung bzw. Verteilung thermischer Energie von den steuerbaren Elementen 215 vorgesehen sein. Optional ist auch ein Lüfter 232 zur Zwangsbelüftung des Kühlkörpers 230 vorgesehen.

Eine Steuervorrichtung 235 ist dazu eingerichtet, das Temperierungselement 110 und insbesondere die steuerbaren Elemente 215 zu steuern. Bevorzugt ist die Steuervorrichtung 235 mit einem Sensor 240 zur Erfassung eines benachbarten, und insbesondere angrenzenden weiteren Temperierungselements 110 verbunden. Außerdem kann eine drahtlose Kommunikationseinrichtung 245 zur Kommunikation mit einem weiteren Temperierungselement 110 oder einer Bedieneinrichtung 140 vorgesehen sein.

Ein Rahmen 250 kann das Temperierungselement 110 seitlich abschließen und insbesondere eine oder mehrere Seitenflächen 125 definieren. Optional ist ein elektrischer Energiespeicher 255 vorgesehen, der vorliegend durch mehrere zylindrische Akkumulatoren gebildet ist. Ein Träger 260 kann zur Fixierung von Elementen des Temperierungselements 110, insbesondere des elektrischen Energiespeichers 255, vorgesehen sein. Eine optionale Bodenplatte 265 kann als unterer Abschluss vorgesehen sein.

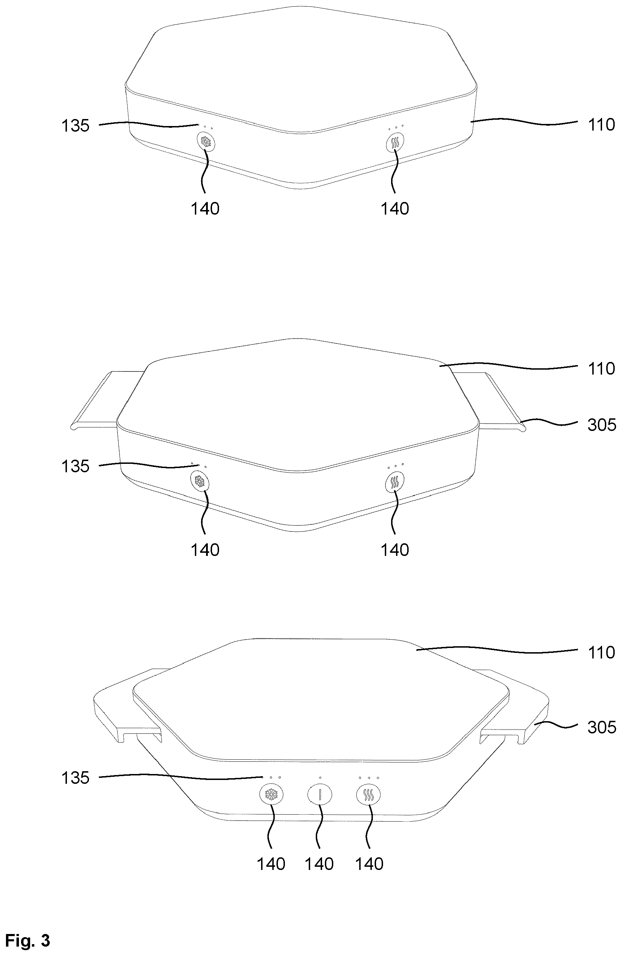

Figur 3 zeigt Ansichten weiterer Ausführungsformen eines Temperierungselements 110. In einer oberen Darstellung ist ein Temperierungselement 110 nach der in Figur 1 gezeigten Art dargestellt.

In einer mittleren Darstellung ist ein Temperierungselement 110 mit seitlich ausklappbaren Griffen 305 dargestellt. Die Griffe 305 können nach unten eingeklappt werden, sodass sie jeweils eine Seitenfläche 125 des Temperierungselements 110 definieren.

In einer unteren Darstellung ist ein ähnliches Temperierungselement 110 dargestellt, das über zwei seitlich herausziehbare Griffe 305 verfügt. Die Griffe 305 können in horizontaler Richtung aus dem Temperierungselement 110 heraus- bzw. in dieses zurückgeschoben werden.

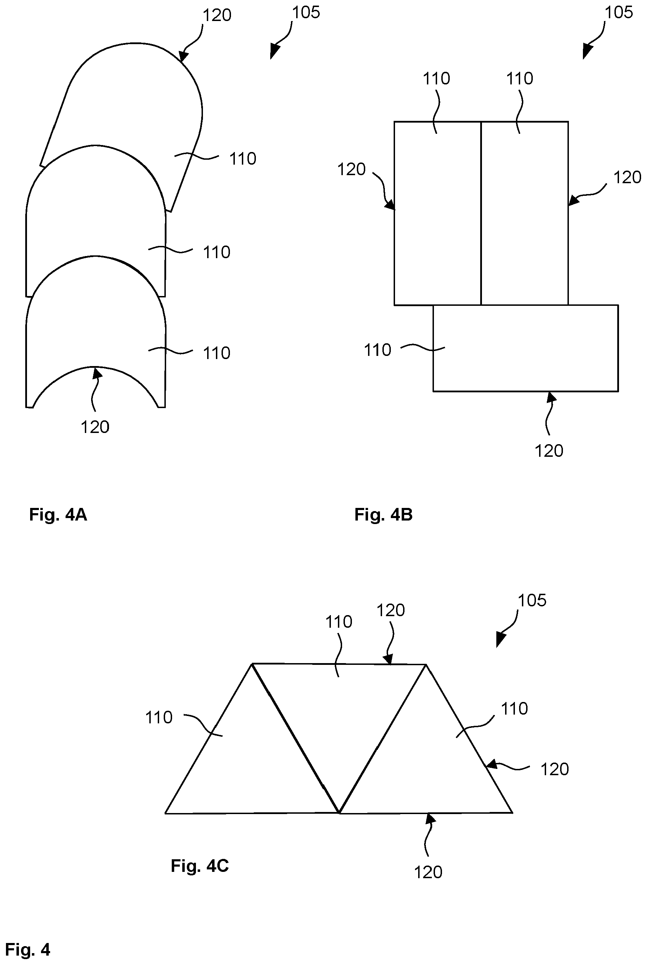

Figur 4 zeigt beispielhafte Anordnungen von Temperierungselementen 110. Figur 4A zeigt eine erste Ausführungsform, in der jedes Temperierungselement 110 eine konkave und eine konvexe Anlagefläche 120 aufweist. Die Anlageflächen 120 können in ihrer Form jeweils einem Kreisbogen folgen, sodass die Temperierungselemente 110 unter gegenseitiger Anlage der Anlageflächen 120 in einem vorbestimmten Winkelbereich aneinandergelegt werden können. So kann beispielsweise eine gerade Reihe oder ein Bogen aus Temperierungselementen 110 gebildet werden.

Figur 4B zeigt rechteckige Temperierungselemente 110 mit geraden Anlageflächen 120. Es ist zu beachten, dass Anlageflächen 120 verschiedener Temperierungselemente 110 einander nicht notwendigerweise vollständig überdecken müssen. Vielmehr kann auch eine teilweise Anlage zulässig sein, wie durch die Anlage eines vertikalen und eines horizontalen Temperierungselements 110 dargestellt ist.

Figur 4C zeigt Temperierungselemente 110 mit dreieckiger Grundfläche. Die Dreiecke sind bevorzugt gleichseitig.

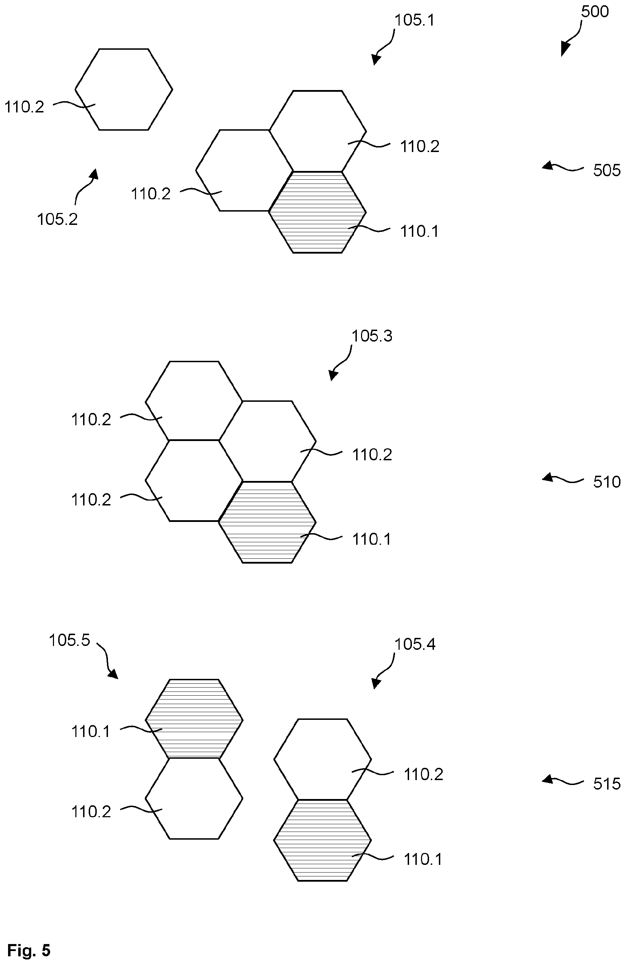

Figur 5 zeigt eine Illustration eines Verfahrens 500 zum Steuern von Temperierungselementen 110. Das Verfahren 500 kann ein Zusammenfügen und/oder Trennen von Anordnungen 105 umfassen. Jede Anordnung 105 kann eines oder mehrere Temperierungselemente 110 umfassen. Die dargestellten Anordnungen 105 sind als rein beispielhaft zu betrachten.

In einem ersten Schritt 505 besteht eine erste Anordnung 105.1, die beispielhaft drei Temperierungselemente 110 umfasst, und eine zweite Anordnung 105.2, die beispielhaft nur ein Temperierungselement 110 umfasst. In der ersten Anordnung 105.1 sind ein primäres Temperierungselement 110.1 und zwei sekundäre Temperierungselemente 110.2 vorgesehen. In der zweiten Anordnung 105.2 existiert nur ein Temperierungselement 110, welches zum autarken Betrieb primär ist. Sind weitere Temperierungselemente 110 vorgesehen, so handelt es sich um sekundäre Temperierungselemente 110.2.

In einem Schritt 510 sind die Anordnungen 105.1 und 105.2 zu einer dritten Anordnung 105.3 zusammengefügt. Als primäres Temperierungselement 110.1 kann dasjenige übernommen werden, das vor dem Zusammenfügen im Schritt 505 Bestandteil der zahlenmäßig größeren Anordnung 105.1, 105.2 war. Vorliegend ist dies das primäre Temperierungselement 110.1 der ersten Anordnung 105.1. Das zuvor primäre Temperierungselement 110.1 der zweiten Anordnung 105.2 ist in der dritten Anordnung 105.3 ein sekundäres Temperierungselement 110.2.

Sollte zwischen den Anordnungen 105.1 und 105.2 zahlenmäßige Gleichheit bezüglich der umfassten Temperierungselemente 110 bestehen, so kann der Konflikt beispielsweise durch ein Losverfahren, eine Heuristik oder eine Benutzereingabe aufgelöst werden.

In einem Schritt 515 ist die dritte Anordnung 105.3 in eine vierte Anordnung 105.4 und eine fünfte Anordnung 105.5 aufgeteilt. Die vierte Anordnung 105.4 umfasst das primäre Temperierungselement 110.1 der dritten Anordnung 105.3. Das ebenfalls umfasste sekundäre Temperierungselement 110.2 wird in Abhängigkeit dieses Elements 110.1 betrieben. Die fünfte Anordnung 105.5 umfasst zunächst nur zwei sekundäre Temperierungselemente 110.2. Unter diesen muss ein neues primäres Temperierungselement 110.1 gefunden werden, um einen konzertierten Betrieb der umfassten Temperierungselemente 110 zu ermöglichen.

In einer Ausführungsform wird dasjenige Temperierungselement 110 als primäres bestimmt, das zuletzt, vorliegend also im Schritt 505, als primäres Temperierungselement 110.1 betrieben wurde. In einer anderen Ausführungsform kann eine Heuristik oder ein Losverfahren eingesetzt werden. Ein Steuerungsziel des neu festgelegten primären Temperierungselements 110.1 der fünften Anordnung 105.5 kann einem zuletzt geltenden Steuerungsziel gelten. Dabei kann das in der zweiten Anordnung 105.2 oder das in der dritten Anordnung 105.3 geltende Steuerungsziel ausgewählt werden. Das Steuerungsziel kann auch neu bestimmt werden, beispielsweise auf der Basis einer Temperaturmessung oder einer Benutzereingabe.

Das Aufnehmen eines Temperierungselements 110 in eine Anordnung 105 kann auch erfolgen, ohne dass ein Temperierungselement 110 bewegt wird. Dazu kann das aufzunehmende Temperierungselement 110.2 als sekundär zum primären Temperierungselement 110.1 der Anordnung 105 bestimmt und diesem zugeordnet werden. Entsprechend kann bei der Aufnahme mehrerer Temperierungselemente 110 zu einer Anordnung 104 vorgegangen werden.

Es kann auch vorgesehen sein, eine bestehende Anordnung 105 aufzuteilen, ohne dass eines der umfassten Temperierungselemente 110 bewegt wird. Ein aus der Anordnung 105 zu entfernendes sekundäres Temperierungselement 110 kann abgeschaltet oder als primär konfiguriert werden. Sollen mehrere Temperierungselemente 110 aus der Anordnung 105 entfernt werden, kann eines davon als primär bestimmt werden und die anderen können dem neuen primären Temperierungselement 110 zugeordnet werden.

### Bezugszeichen

- 100: System
- 105: Anordnung
- 105.1: erste Anordnung
- 105.2: zweite Anordnung
- 105.3: dritte Anordnung
- 105.4: vierte Anordnung
- 105.5: fünfte Anordnung
- 110: Temperierungselement
- 110.1: primäres Temperierungselement
- 110.2: sekundäres Temperierungselement
- 115: Speisenbehälter
- 120: Anlagefläche
- 125: Seitenfläche
- 130: Bedienelement
- 135: Anzeigeelement
- 140: Bedieneinrichtung

- 205: Ablage
- 210: Träger
- 215: steuerbares Element
- 220: Gewichtssensor
- 225: Temperatursensor
- 230: Kühlkörper
- 232: Lüfter
- 235: Steuervorrichtung
- 240: Sensor für weiteres Temperierungselement
- 245: drahtlose Kommunikationseinrichtung
- 250: Rahmen
- 255: elektrischer Energiespeicher
- 260: Träger
- 265: Bodenplatte

- 305: Griff
- 500: Verfahren
- 505: erster Schritt
- 510: zweiter Schritt
- 515: dritter Schritt

## Patentansprüche

1. Temperierungselement (110) als Untersatz für einen Speisenbehälter (115), wobei das Temperierungselement (110) folgendes umfasst:
- eine Anlagefläche (120) für den Speisenbehälter (115);
- ein steuerbares Element (215) zur Erwärmung oder Abkühlung der Anlagefläche (120);
- einen Sensor (240) zur Abtastung eines an das Temperierungselement (110) angrenzenden weiteren Temperierungselements (110); und
- eine Steuervorrichtung (235), die dazu eingerichtet ist, eine Temperatur der Anlagefläche (120) in Abhängigkeit des weiteren Temperierungselements (110) zu steuern.

2. Temperierungselement (110) nach Anspruch 1, wobei die Steuervorrichtung (235) dazu eingerichtet ist, die Temperatur der Anlagefläche (120) auf eine vorbestimmte Zieltemperatur zu steuern; wobei ferner eine Kommunikationseinrichtung (245) zur Kommunikation mit dem weiteren Temperierungselement (110) vorgesehen ist; und wobei die Steuervorrichtung (235) dazu eingerichtet ist, die Zieltemperatur an das weitere Temperierungselement (110) bereitzustellen oder eine Zieltemperatur des weiteren Temperierungselements (110) zu empfangen.

3. Temperierungselement (110) nach Anspruch 1, wobei der Sensor (240) dazu eingerichtet ist, eine Temperatur der Anlagefläche (120) des weiteren Temperierungselements (110) zu bestimmen; und wobei die Steuervorrichtung (235) dazu eingerichtet ist, die Temperatur der Anlagefläche (120) in Abhängigkeit der Temperatur der Anlagefläche (120) des weiteren Temperierungselements (110) zu steuern.

4. Temperierungselement (110) nach einem der vorangehenden Ansprüche, ferner umfassend einen Temperatursensor (225) zur Bestimmung einer Temperatur des Speisenbehälters (115).

5. Temperierungselement (110) nach einem der vorangehenden Ansprüche, ferner umfassend einen Gewichtssensor (220); wobei die Steuervorrichtung (235) dazu eingerichtet ist, eine mangelnde Anlage des Speisenbehälters (115) an der Anlagefläche (120) zu bestimmen und das steuerbare Element (215) zu deaktivieren.

6. Temperierungselement (110) nach einem der vorangehenden Ansprüche, wobei das Temperierungselement (110) derart geformt ist, dass es seitlich an einem weiteren, gleich geformten Temperierungselement (110) anliegen kann.

7. System (100), umfassend wenigstens zwei Temperierungselemente (110) jeweils nach einem der vorangehenden Ansprüche.

8. System (100), umfassend ein Temperierungselement (110) nach einem der Ansprüche 1 bis 7 und eine Bedieneinrichtung (140) mit einer drahtlosen Kommunikationseinrichtung zur Steuerung des Temperierungselements (110).

9. System (100) nach Anspruch 8, wobei die Bedieneinrichtung (140) dazu eingerichtet ist, ein Temperierungselement (110) als primäres oder sekundäres Temperierungselement (110) zu konfigurieren; wobei ein sekundäres Temperierungselement (110.2) dazu eingerichtet ist, in Abhängigkeit eines primären Temperierungselements (110.1) gesteuert zu werden.

10. Verfahren (500) zum Steuern einer zusammenhängenden Anordnung (105) benachbarter Temperierungselemente (110), die jeweils zur Temperierung eines Speisenbehälters (115) eingerichtet sind; wobei das Verfahren (500) folgende Schritte umfasst:
- Bestimmen eines der Temperierungselemente (110) als primäres Temperierungselement (110.1);
- Bestimmen der restlichen Temperierungselemente (110) als sekundäre Temperierungselemente (110.2); und
- Steuern der sekundären Temperierungselemente (110.2) in Abhängigkeit des primären Temperierungselements (110.1).

11. Verfahren (500) nach Anspruch 10, wobei bestimmt wird, dass zu einer Anordnung (105.1) mit einem primären Temperierungselement (110.1) ein weiteres Temperierungselement (110) hinzugefügt wird; wobei das hinzugefügte Temperierungselement (110) als sekundär bestimmt wird.

12. Verfahren (500) nach Anspruch 10, wobei bestimmt wird, dass zu einer ersten Anordnung (105.1) mit einem primären Temperierungselement (110.1) eine zweite Anordnung (105.2) mit einem primären Temperierungselement (110.1) hinzugefügt wird; wobei die Temperierungselemente (110) der zahlenmäßig kleineren Anordnung (105.2) als sekundär bestimmt werden.

13. Verfahren (500) nach einem der Ansprüche 10 bis 12, wobei ein Temperierungselement (110.1) als primär bestimmt wird, an dem eine Einstellung vorgenommen wird.

14. Verfahren (500) nach einem der Ansprüche 10 bis 13, ferner folgende Schritte umfassend:
- Erfassen, dass das primäre Temperierungselement (110.1) aus der Anordnung (105) entfernt wurde; und
- Bestimmen eines der verbleibenden Temperierungselemente (110) als primär.
